Europäisches Patentamt

European Patent Office

Office européen des brevets

(19)

(11) Numéro de publication : **0 324 807 B1**

## (12) FASCICULE DE BREVET EUROPEEN

(45) Date de publication du fascicule du brevet :
15.07.92 Bulletin 92/29

(21) Numéro de dépôt : **88905387.2**

(22) Date de dépôt : **09.06.88**

(86) Numéro de dépôt international :
**PCT/FR88/00293**

(87) Numéro de publication internationale :
**WO 88/09998 15.12.88 Gazette 88/27**

(51) Int. Cl.⁵ : **G21C 9/016**

(54) **DISPOSITIF POUR EMPECHER LA PENETRATION DANS LE SOL D'UN COEUR DE REACTEUR NUCLEAIRE FONDU.**

(30) Priorité : **11.06.87 FR 8708748**

(43) Date de publication de la demande :
**26.07.89 Bulletin 89/30**

(45) Mention de la délivrance du brevet :
**15.07.92 Bulletin 92/29**

(84) Etats contractants désignés :
**BE CH DE FR GB LI NL SE**

(56) Documents cités :
**DE-A- 2 363 845**
**DE-A- 2 625 357**
**FR-A- 2 336 772**
**GB-A- 2 030 347**

(73) Titulaire : **SOCIETE DES ELECTRODES ET REFRACTAIRES "SAVOIE" (SERS)**
**Tour Manhattan 6 place de l'Irsis**
**F-92400 Courbevoie (FR)**

(72) Inventeur : **DUMAS, Daniel**
**3, rue Michelet**
**F-69800 S.-Priest (FR)**
Inventeur : **HOYNANT, Georges**
**5, chemin des Vignes-Neauphlette**
**F-78980 Breval (FR)**

(74) Mandataire : **Vanlaer, Marcel et al**
**PECHINEY 28, rue de Bonnel**
**F-69433 Lyon Cédex 3 (FR)**

## Description

### DOMAINE TECHNIQUE DE L'INVENTION

L'invention concerne un dispositif pour empêcher la pénétration dans le sol d'un coeur de réacteur nucléaire fondu, notamment après perte de contrôle et emballement du réacteur.

### ETAT DE LA TECHNIQUE

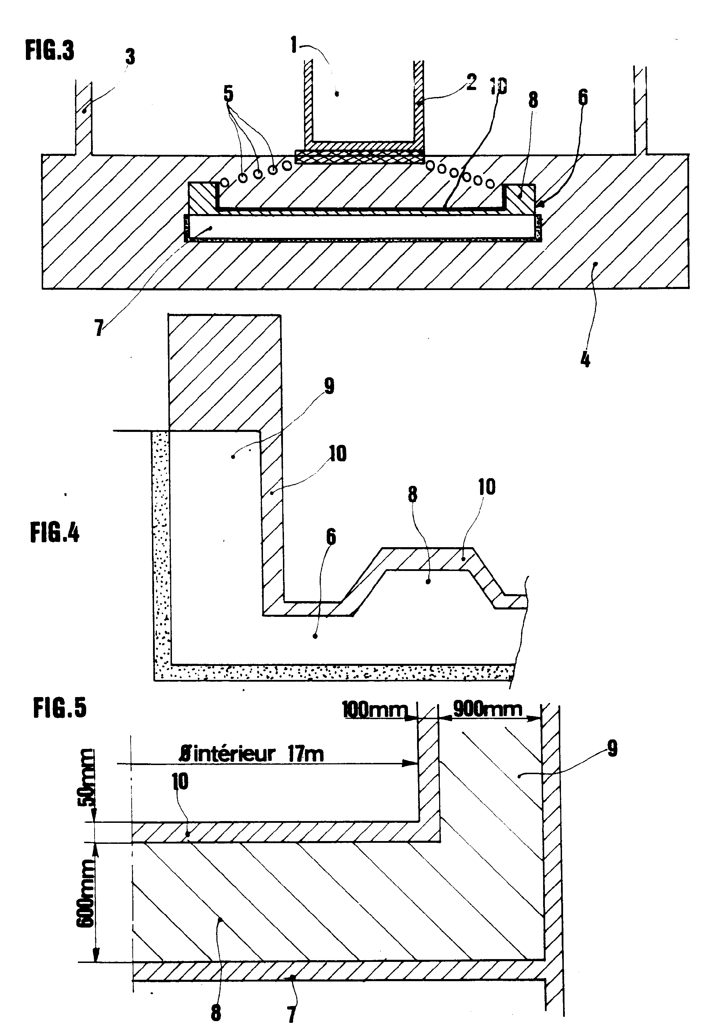

Pour la bonne compréhension de l'invention, on rappelle qu'un réacteur nucléaire à fission d'uranium est généralement constitué (figure 3) par un coeur 1 contenant le réacteur proprement dit, disposé à l'intérieur d'une enceinte 2 en béton. Cette enceinte est elle-même enfermée dans une autre enceinte 3 dite de confinement, également en béton, avec un fond 4, appelé "radier", de 4 à 5 mètres d'épaisseur, généralement supporté par des pilotis, de façon à constituer un ensemble anti-sismique.

De récents incidents dans des centrales nucléaires ont montré que des risques d'accidents majeurs, pouvant conduire à la fusion du coeur, n'étaient pas à exclure. Dans ce cas, et notamment dans les centrales du type de celles installées en France, le système de double enveloppe et de filtres permet de confiner à l'intérieur de l'enceinte les émanations radioactives. Par contre, il est à peu près certain que la masse en fusion du corium ne pourra pas être stoppée, avec tous les risques que cela comporte sur la solidité de l'infrastructure de sauvegarde et de confinement, ainsi que, et surtout, sur la nappe phréatique.

Après tout incident qui va conduire à la destruction du coeur d'un réacteur, on se trouve en présence d'une masse, en fusion composée essentiellement:

- d'une phase oxyde, énergétique puisqu'elle contient des produits de fission, constituée principalement d'oxydes d'uranium et de zirconium,

- et d'une phase métallique comportant notamment de l'acier, du zircaloy, du chrome et divers autres métaux.

L'ensemble, appelé "corium" constitue une masse très énergétique qui au bout d'un jour ou deux va conserver, du fait de la radioactivité de certains éléments et des réactions exothermiques de décomposition du béton, une puissance résiduelle de l'ordre de 10 à 15 MW pour un réacteur d'une puissance initiale de l'ordre de 1000 MW, et une température que l'on a pu estimer à 2000°C environ.

Cette masse en fusion attaque et décompose le béton du radier et l'on estime qu'au bout de quelques heures la vitesse d'attaque est de quelques centimètres à l'heure. Au bout de quelques jours, le béton du soubassement du radier sera inexorablement traversé et le corium ira jusque dans le sous-sol.

Par ailleurs, dès lors que le radier est traversé, l'étanchéité de l'enceinte de confinement n'est plus assurée et il peut se produire des fuites de gaz radioactifs.

### EXPOSE DU PROBLEME

Compte-tenu des dangers que présente un réacteur ayant échappé au contrôle, il est nécessaire de concevoir un moyen permettant de stopper le corium avant qu'il n'atteigne le sous-sol, en s'opposant ainsi aux risques majeurs que constitue la pollution du sous-sol et de l'atmosphère du fait des fuites.

Un tel dispositif doit remplir la double fonction suivante:

– En contact avec le corium, il doit être réfractaire et inerte chimiquement vis à vis des constituants indiqués plus haut, jusqu'à des températures de l'ordre de 2000 à 2500°C;

– Il doit évacuer le flux thermique résiduel généré par le corium en abaissant la température de l'interface corium-réfractaire.

Ce matériau réfractaire et inerte devra, en outre, être associé à des circuits de refroidissement conçus et dimensionnés pour évacuer le flux thermique ainsi transféré.

On ne connaît pas, à l'heure actuelle, de matériau capable d'assurer, à lui seul, les deux fonction et possédant une conductivité thermique élevée dans l'intervalle de température concerné. Il faut donc séparer les deux fonctions et les confier chacune à un matériau convenable.

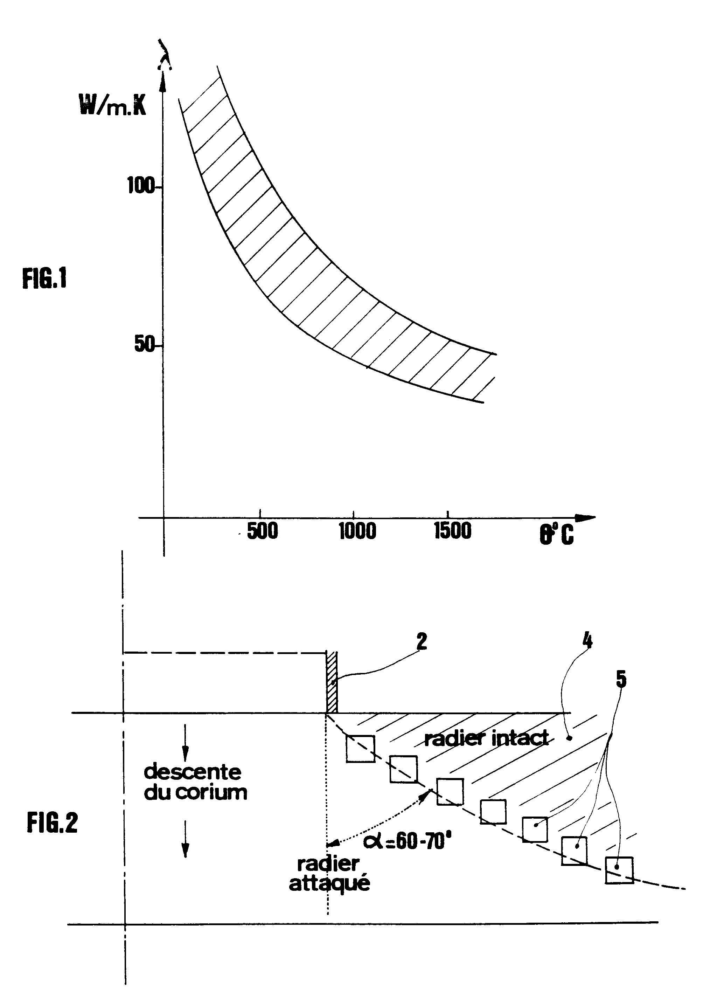

Dans la demande de brevet français FR 2336772, on a décrit un revêtement de protection pour la fosse de sécurité d'un réacteur nucléaire, constitué par une couche d'un matériau à haut point de fusion tel que le dioxyde de thorium ou le dioxyde d'uranium, caractérisé en ce qu'il comporte, sous une couche de ce matériau peu fusible, une couche inférieure d'un matériau présentant une bonne conductivité thermique, tel que le graphite. Toutefois, ce dispositif est directement exposé à la chute du corium fondu, en cas d'emballement du réacteur, et ce corium, encore peu étalé, comme le montre la figure 1, et porté encore à une température de plus de 2000°C, risque de détruire rapidement la partie centrale de la cuvette de rétention et de poursuivre sa descente de façon incontrôlée.

Le document GB-A-2030347 décrit une fosse de sécurité revêtue par une chemise en acier refroidie à l'eau. La coulée du corium fondu va se répandre sur un cône de distribution qui va la dévier sur un lit d'absorbtion

### OBJET DE L'INVENTION

Compte tenu de ce que l'on vient d'exposer, il apparaît que le moyen pour empêcher la pénétration dans le sol d'un coeur de réacteur nucléaire fondu, objet de la présente invention, sera constitué par une cuvette circulaire en graphite très conducteur reposant sur des systèmes de refroidissement appropriés. La face interne de la cuvette sera revêtue d'une couche de zircone dont l'épaisseur aura été calculée pour que le graphite travaille dans la zone de température optimale. Ladite cuvette sera insérée dans le coeur du radier de manière à bloquer le corium dans le radier, tout en permettant à celui-ci de conserver son étanchéité et, en outre on prévoit des moyens pour assurer un étalement du corium fondu avant qu'il arrive au niveau de la cuvette de rétention, de façon qu'il entre en contact avec le revêtement réfractaire sur la plus grande partie de sa surface.

De façon plus précise, l'objet de l'invention est un dispositif pour empêcher la pénétration dans le sol du corium d'un réacteur nucléaire fondu, ce réacteur étant supporté par un radier en béton en appui sur le sol, et supportant une cuvette de rétention insérée dans le radier en béton dont la partie supérieure en contact avec le corium fondu est constitué d'un matériau réfractaire et chimiquement inerte, vis-à-vis des constituants dudit corium, choisi parmi la zircone ou la thorine sous une épaisseur de l'ordre de 2 à 10 centimètres, et dont la partie inférieure est constituée d'un matériau réfractaire et bon conducteur de la chaleur, tel que le graphite, associé à un circuit de refroidissement par circulation de fluide, caractérisé en ce qu'il comporte une pluralité de cavités concentriques formées dans le radier au dessus de la cuvette, chaque cavité ayant un diamètre externe supérieur à celle qui est immédiatement placée au-dessus d'elle. De préférence, la cuvette de rétention est insérée sensiblement à mi-hauteur du radier, la partie supérieure de celui-ci assurant un premier ralentissement de la descente du corium en même temps qu'un étalement latéral, tandis que la partie inférieure demeure intacte et continue à assurer l'étanchéité de l'enceinte de confinement du réacteur.

La partie inférieure coopère avec des moyens de refroidissement, connus en eux-mêmes, pour évacuer le flux thermique recueilli par la cuvette de rétention.

Les figures 1 à 5 illustrent l'invention.
La figure 1 montre la zone (en hachures) dans laquelle se situe la conductivité thermique moyenne des graphites (en W/m.K.) en fonction de la température.

La figure 2 montre la progression de l'attaque latérale du radier en béton 4 en fonction de la descente du corium, et le moyen pour favoriser cette attaque latérale grâce à des séries de cavités 5 convenablement disposées.

La figure 3 est une coupe très simplifiée de la partie inférieure d'un réacteur 1 muni de la cuvette de rétention 6 objet de l'invention, des cavités 5 favorisant l'attaque latérale, et des moyens de refroidissement 7 de la cuve. On a également représenté l'enceinte du réacteur 2 et l'enceinte de confinement 3.

La figure 4 est une variante de réalisation dans laquelle la cuvette de rétention 6 comporte une nervure 8 augmentant sa surface totale, donc le flux de chaleur admissible.

La figure 5 montre le détail de réalisation de la cuvette 6, avec la partie en graphite 8, le revêtement de zircone 10, le rebord latéral 9 sur lequel le revêtement de zircone a été épaissi, et la position du système de refroidissement 7.

Considérons tout d'abord le problème du flux thermique à évacuer:

La loi de l'écoulement d'un flux thermique en régime permanent, au travers d'une paroi plane en matériau i est donné par la relation suivante (loi de Fourier).

$$\Phi = \frac{\lambda \, iS \, [T_{2,i} - T_{1,i}]}{e_i}$$

dans laquelle:

$\Phi$ est le flux thermique

$\lambda i$ la conductivité thermique du matériau

S la surface de contact

$e_i$ l'épaisseur du matériau i

$T_{2,i}$ la température de la face chaude du matériau i

$T_{1,i}$ la température de la face froide du matériau i

On note donc que le flux évacué sera d'autant plus important que la conductibilité thermique du matériau i sera élevée et que la surface de contact (corium-réfractaire) sera importante.

Essayons maintenant de résoudre la première fonction dévolue au système de protection: le matériau réfractaire doit être parfaitement inerte chimiquement vis à vis des oxydes, notamment de l'oxyde d'uranium, jusqu'à des températures de l'ordre de 2500°C: la zircone (PF: 2650°C) remplit ces conditions. Par contre, ce produit a une conductivité thermique relativement faible (env. 3W/m.K.). Il ne peut donc être employé seul et en grande épaisseur, car il constituerait un frein à l'évacuation du flux thermique. La thorine $ThO_2$ peut également convenir, sous réserve de son prix élevé. Sa conductivité thermique, variable avec la température est de 2 à 3 fois supérieure à celle de la zircone.

La solution réside donc dans un système dans lequel la première fonction est assurée par une couche de zircone de faible épaisseur, de l'ordre de 2 à 10 centimètres.

La deuxième fonction est l'évacuation des calories. Le matériau réfractaire parfaitement adapté à cette fonction est le graphite, à condition qu'il travaille dans des zones de températures peu élevées, car sa conductivité thermique décroît avec la température (voir figure 1). Il y aura donc tout intérêt à maintenir son interface avec la zircone à une température inférieure à 300°C.

En outre, il est souhaitable que la conductivité thermique du matériau constituant la partie inférieure soit au moins égale à quinze fois celle du matériau constituant la partie supérieure, qui doit être comprise, de préférence, entre 1 et 15 W/m.K. C'est le cas du graphite.

Considérons maintenant le problème de la surface (paramètre S de la formule de Fourier):

Nous avons effectué des calculs thermiques par modélisation pour voir dans quelle mesure le système que nous avons défini s'insère à l'intérieur d'un réacteur nucléaire compte tenu de la géométrie adoptée.

Le coeur 1 d'un réacteur généralement a un diamètre d'environ 5 mètres. Si l'on pose le coeur du réacteur à l'intérieur de la cuvette, on trouve que pour un flux à évacuer de 15 MW, la température dans la couche de zircone se situe vers 6000°K. On voit donc qu'il convient de disposer la cuvette à un emplacement tel que la surface de contact corium-zircone soit plus importante que celle qui correspond à un diamètre de cinq mètres (voir exemple 1).

En admettant que l'on veuille maintenir la température de l'interface corium-zircone au voisinage de 1500°C, le calcul montre que la cuvette doit avoir un diamètre de l'ordre de 14-15 mètres (exemples 2 et 3).

Dans ces conditions, une couche de zircone d'une épaisseur de l'ordre de 5 centimètres est suffisante pour permettre au graphite de travailler dans de bonnes conditions thermiques.

Supposons que dans la configuration considérée (coeur du réacteur de 5 mètres de diamètre), on confine le corium de telle manière qu'il amorce préférentiellement la traversée du radier. Au départ, il est en contact avec le béton sur une superficie correspondant à 5-6 mètres de diamètre. Lors de la traversée du radier (figure 2) le corium fondu attaque le béton en profondeur et latéralement. Latéralement, l'attaque s'arrête lorsque le béton n'est plus en contact avec le corium; du fait de sa pénétration progressive dans le radier; la pénétration latérale, au niveau du front de progression de l'attaque, est d'autant plus importante que le corium s'étale en largeur. Compte tenu de sa température le corium est, soit à l'état liquide, soit à un état pâteux à viscosité relativement faible qui lui permet de remplir tout l'espace accessible sur le front d'attaque. De ce fait, au cours de sa descente progressive, sa hauteur diminue et sa surface frontale augmente. L'attaque du radier va donc progresser avec un certain angle d'élargissement. On aurait donc intérêt à ce que cet angle d'attaque (par rapport à la verticale) soit le plus grand possible, pour que la cuvette de rétention puisse être disposée à la construction relativement près de la surface du radier.

Cela permet de conserver, sous la cuvette de rétention, une épaisseur de radier intacte suffisamment importante pour qu'il continue à assurer pendant de très nombreuses années après destruction accidentelle du réacteur, ses trois fonctions essentielles: étanchéité aux liquides et gaz radioactifs, résistance mécanique et intégrité de l'ensemble de la structure, et résistance anti-sismique, sans qu'il soit nécessaire d'augmenter, de façon prohibitive, l'épaisseur initiale du radier.

En outre, la position de la cuvette de rétention dans le radier doit répondre à un autre impératif: lors de la descente et de l'étalement progressif du corium fondu dans le radier en béton, l'énergie produite par le corium diminue progressivement, par exemple de 30 à 40 MW pour atteindre, asymptotiquement, une valeur de l'ordre de, par exemple 15 MW, qui correspond à l'énergie de désintégration des radio-éléments à durée de vie moyenne et longue. Il est donc souhaitable que le corium n'atteigne la cuvette de rétention que lorsque son énergie est descendue au voisinage de cette limite de puissance asymptotique. La modélisation de ce phénomène permet d'évaluer l'épaisseur optimale de béton à 2 ou 3 mètres pour concilier les différentes exigences que l'on vient d'énoncer.

A titre d'exemple, si le radier a une épaisseur initiale de 5 mètres et que la cuvette de rétention soit située sous 3 mètres de radier, il restera près de 2 mètres de radier intact pour assurer les fonctions indiquées.

On peut perfectionner ce dispositif en y incorporant des systèmes déviants appropriés permettant d'accroître la portée de l'attaque latérale du radier. Ces systèmes deviants peuvent être constitués par une pluralité de cavités concentriques formées dans le radier, au-dessus de la cuvette 6, et disposées en relation superposée, chaque cavité ayant un diamètre supérieur à celle qui est située immédiatement au-dessus d'elle. L'angle d'évasement $\alpha$ formé par l'ensemble des cavités concentriques est compris entre 45° et 70°, et de préférence entre 60° et 70°. Cet angle peut aussi augmenter progressivement du haut vers le bas, comme cela apparaît sur la figure 2. Grâce à cet élargissement du front d'attaque du radier, (figure 2) la cuvette 6 peut alors être disposée sous seulement 2 mètres de radier au lieu de 3 si l'angle d'attaque $\alpha$ est de l'ordre de 60 à 70° (par rapport à la verticale).

Le système de confinement de la pénétration verticale par le corium est représenté sur la figure 3. Le système de refroidissement 7 a été simplement schématisé car il ne fait pas partie de l'invention proprement dite (circulation de fluide ou caloducs, par exemple).

Un tel système stoppera la pénétration verticale. Il évitera la pollution du sous-sol tout en maintenant en espace confiné les vapeurs radioactives.

La figure 4 montre un moyen d'augmenter la surface de la cuvette en contact avec le corium, grâce à une ou plusieurs nervures concentriques 8, également recouvertes de zircone 10.

Sur la figure 5, nous avons représenté un détail montrant une façon de disposer la cuvette de confinement 6. En effet, la géométrie de l'ensemble doit permettre de conserver l'intégrité de toute la structure du réacteur malgré la disparition de la partie centrale. Il y a donc tout intérêt à accroître la surface de contact corium réfractaire, tout en diminuant si possible le diamètre de la cuvette. Par ailleurs, l'ensemble devra être adapté au volume du corium. La masse de corium représente un volume de 30 à 40 mètres cubes, soit pour une cuvette de 15 mètres de diamètre une hauteur de corium d'environ 20 centimètres. Ce qui, latéralement, correspond à environ 5% de la surface de contact participant à l'écoulement du flux thermique et permet de diminuer d'autant les dimensions de la cuvette.

Dans la réalisation selon la figure 5 la partie en graphite 8 à une épaisseur de 600 mm, et elle est munie d'un rebord 9 et d'un recouvrement de zircone 10 de 50 mm d'épaisseur, dans la partie horizontale, épaisseur qui a été portée à 100 mm sur le rebord 9. La face inférieure de la partie en graphite 8 est en contact avec un moyen de refroidissement 7 non détaillé (circulation de fluides, caloducs... etc).

## EXEMPLES DE MISE EN OEUVRE

On s'est placé dans les hypothèses suivantes:
– puissance thermique initiale du réacteur 2700 MW
– cuvette de rétention constituée par une épaisseur de graphite de 600 mm recouverte d'une couche de zircone de 50 mm d'épaisseur
– conductivité du graphite de 200 W/m.K. dans le sens horizontal et de 170 W/m.K. dans le sens vertical, du fait de l'anisotropie du produit.
– conductivité thermique de la zircone de 3 W/m.K.
– système de refroidissement imposant une température de 50°C sous la couche de graphite.
– flux thermique à évacuer: 15 MW.
– température de fusion du corium: de l'ordre de 1500°C

### EXEMPLE 1 : (à titre comparatif)

Le revêtement de protection est conforme à celui de la figure 5, avec un diamètre de 5 mètres, (sensiblement égal à celui du coeur du réacteur), disposé au-dessus de la cuvette de rétention munie de sa couche de zircone.
Le calcul thermique montre qu'un tel système ne peut évacuer que 1,2 MW, ce qui est tout à fait insuffisant. La température (calculée) à mi hauteur dans la couche de zircone est de 5000°C. Il n'y a donc aucune protection; ce mode de mise en oeuvre ne remplit pas les conditions posées.

### EXEMPLE 2 (selon l'invention)

Cas d'un revêtement de protection, selon la figure 5, de 15 mètres de diamètre.

Le corium étant arrivé au contact de la couche de zircone, sur toute la surface de la cuvette de rétention, et le flux à évacuer étant de 15 MW, la température moyenne de la zircone, au centre de la cuvette, est de 1000°C environ, la température de l'interface corium-zircone est de 1500°C, la température de l'interface zircone-graphite est de l'ordre de 330°C. Cette température d'interface est un peu trop élevée, et place le graphite dans un domaine de conductivité thermique peu favorable (voir figure 1); mais le corium est malgré tout retenu dans la cuvette.

### EXEMPLE 3

Le revêtement de protection (cuvettes de rétention) selon la figure 5 a son diamètre porté à 17 mètres.

Le corium étant arrivé au contact de la couche de zircone, sur toute la surface de la cuvette de rétention, et le flux à évacuer étant de 15 MW. la température moyenne de la zircone, au centre de la cuvette, est de 810°C environ, la température de l'interface coriumzircone est de 1500°C, la température de l'interface zircone-graphite est de l'ordre de 250°C. Cette température d'interface est correcte, et place le graphite dans un domaine de conductivité thermique favorable; Le but de l'invention est ainsi atteint, et la pénétration du corium dans le radier est stoppée avec une très bonne marge de sécurité.

## Revendications

1. Dispositif pour empêcher la pénétration dans le sol de corium d'un réacteur nucléaire fondu, ce réacteur étant supporté par un radier en béton (4) en appui sur le sol, dans lequel se trouve une cuvette de rétention (6) insérée dans le radier en béton dont la partie supérieure (10) suceptible de venir en contact avec le corium fondu est constituée d'un matériau réfractaire et chimiquement inerte vis-à-vis des constituants dudit corium, choisi parmi la zircone ou la thorine sous une épaisseur de l'ordre de 2 à 10 centimètres, et dont la partie inférieure (8) est constituée d'un matériau réfractaire et bon conducteur de la chaleur, tel que le graphite, associé à un circuit de refroidissement par circulation de fluide, caractérisé en ce qu'il comporte une pluralité de cavités concentriques (5) formées dans le radier (4) au-dessus de la cuvette (6), chaque cavité ayant un diamètre supérieur au diamètre de celle placée immédiatement au-dessus d'elle.

2. Dispositif selon revendication 1, caractérisé en ce que la cuvette (6) est insérée sensiblement à mi-hauteur du radier.

3. Dispositif selon revendication 1 ou 2, caractérisé en ce que l'angle d'évasement $\alpha$ formé par l'ensemble des cavités concentriques est compris entre 45 et 70° par rapport à la verticale.

4. Dispositif selon l'une quelconque des revendication 1 à 3, caractérisé en ce que la cuvette (6) comporte au moins une nervure (8) en vue d'augmenter sa surface de contact avec le corium.

## Claims

1. An arrangement to prevent the corium of a molten nuclear reactor from penetrating into the ground, the reactor being supported by a concrete raft 4 bearing on the ground and containing a retaining basin 6 inserted in the raft, the upper portion 10 of the basin, which may come into contact with the molten corium, being made of a material which is refractory and chemically inert vis-a-vis the constituents of the corium, selected from zirconia or thoria at a thickness of approximately 2 to 10 cm, and the lower portion 8 being made of a material which is refractory and a good conductor of heat such as graphite, associated with a cooling circuit which operates by circulating a fluid, characterised in that it has a plurality of concentric cavities 5 formed in the raft 4 above the basin 6, each cavity having a diameter larger than that of the cavity immediately above it.

2. The arrangement of claim 1, characterised in that the basin 6 is inserted substantially half way up the height of the raft 4.

3. The arrangement of claim 1 or 2, characterised in that the splay angle $\alpha$ formed by the group of concentric cavities is from 45 to 70° to the vertical.

4. The arrangement of any of claims 1 to 3, characterised in that the basin 6 has at least one rib 8 to increase its area of contact with the corium.

## Patentansprüche

1. Vorrichtung zur Verhinderung des Einbringens des Kerns eines geschmolzenen Kernreaktors in den Boden, wobei der Reaktor von einem Betonfundament (4), das sich auf dem Grund abstützt, getragen wird, wobei sich in dem Fundament ein Rückhaltebehälter (6), der in das Fundament aus Beton eingelassen ist, befindet und dessen oberer Bereich (10) mit dem geschmolzenen Kern in Berührung kommen kann und aus einem hitzebeständigen und gegenüber den Bestandteilen des Reaktorkerns chemisch inertem Material besteht, wobei das Material entweder Zirkon oder Thoriumoxid ist und eine Dicke von 2 bis 10 cm aufweist und dessen unterer Bereich (8) aus einem hitzebeständigen Material, das ein guter Wärmeleiter ist, wie z.B. Graphit besteht, wobei der untere Teil mit einem Kühlmittelkreislauf verbunden ist, gekennzeichnet durch eine Mehrzahl von konzentrischen Höhlungen (5), die in dem Fundament (4) oberhalb des Behälters (6) angeordnet sind, wobei jede Höhlung einen Durchmesser hat, der größer ist als der Durchmesser der Höhlung, die unmittelbar über ihr angeordnet ist.

2. Vorrichtung nach Anspruch 1, dadurch gekennzeichnet, daß der Behälter (6) etwa bis zur Hälfte in das Fundament eingelassen ist.

3. Vorrichtung nach Anspruch 1 oder 2, dadurch gekennzeichnet, daß der Öffnungswinkel $\alpha$ gegenüber der Vertikalen, der durch die Gesamtheit der konzentrischen Höhlungen gebildet wird, zwischen 45 und 70° liegt.

4. Vorrichtung nach einem der Ansprüche 1 bis 3, dadurch gekennzeichnet, daß der Behälter (6) mindestens eine Rippe (8) aufweist, um dessen Kontaktfläche mit dem Kern zu vergrößern.

**FIG.1**

W/m.K

100 —

50 —

500          1000          1500          θ°C

**FIG.2**

2

4

5

descente
du corium

radier intact

α = 60-70°

radier
attaqué

**FIG.3**

1

3

5

2 10

8

6

7

4

**FIG.4**

9

10

8 10

6

**FIG.5**

100mm

900mm

Ø intérieur 17m

50mm

10

9

600mm

8 7

8